# EUROPÄISCHE PATENTSCHRIFT

(11) **EP 2 718 058 B1**
(45) Veröffentlichungstag und Bekanntmachung des Hinweises auf die Patenterteilung: **27.01.2016**
(21) Anmeldenummer: 12703489.0
(22) Anmeldetag: 31.01.2012
(51) Int. Cl.: B23Q 11/08, F16P 3/02

(54) **FALTENBALG**
BELLOWS
SOUFFLET

(30) Priorität: 06.06.2011 DE 202011101487 U
(43) Veröffentlichungstag der Anmeldung: 16.04.2014
(73) Patentinhaber: TRUMPF Laser-und Systemtechnik GmbH, 71254 Ditzingen (DE)
(72) Erfinder: WALSTRA, Olga, 71254 Ditzingen (DE); SAUTER, Dietrich, 72555 Metzingen (DE)
(74) Vertreter: Prüfer & Partner mbB European Patent Attorneys
(86) Internationale Anmeldenummer: PCT/EP2012/051565
(87) Internationale Veröffentlichungsnummer: WO 2012/167954

(56) Entgegenhaltungen:
- DE-A1- 4 431 452
- GB-A- 986 279

## Beschreibung

Die Erfindung betrifft einen Faltenbalg, insbesondere einen Faltenbalg für eine Bearbeitungsmaschine zum Abdecken von beweglichen Teilen der Bearbeitungsmaschine, die bei einer Verschmutzung einem höheren Verschleiß unterliegen.

Dokument GB 986 279 A offenbart einen Faltenbalg für ein Maschinenbett, der in Längsrichtung längenveränderlich ist. Ein erster Schenkel des Faltenbalgs weist eine erste Außenfalte auf und ein zweiter Schenkel des Faltenbalgs weist eine zweite Außenfalte auf, wobei die erste Außenfalte und die zweite Außenfalte in der Längsrichtung gesehen einen Winkel einschließen, der ungleich 90° ist.

Faltenbälge werden üblicherweise aus Stoffbahnen hergestellt, bei denen die Kettfäden in einem rechten Winkel zu den Falten liegen und die Schussfäden in Richtung der Falten liegen, und zwei Seitenflächen in einem rechten Winkel zueinander stehen. Bei einem Auseinanderziehen und Zusammendrücken der Faltenbälge werden die Fäden im Bereich der Zwickel aber geknickt und gewalkt, so dass ein Verschleiß, insbesondere auf Grund von Bruchmechanismen, die sich vorwiegend auf die horizontal verlaufenden Fäden, meist Kettfäden, auswirken, groß ist, da bei häufigen Lastwechseln auf Grund von ungünstiger Faltenführung und Materialanhäufungen in den Balgecken bzw. den Zwickeln der Werkstoff ermüdet.

Es sind Faltenbälge bekannt, bei denen zur Minimierung des Verschleißes der Faltenbälge und damit zur Standzeiterhöhung Stoffbahnen so zugeschnitten sind, dass die Fäden z.B. in einem 45°-Winkel zu einer Falte stehen. Die Stoffzuschnitte werden dann zu einer langen Bahn zusammengenäht, aus der der Faltenbalg hergestellt wird. Dadurch werden die Fäden nicht nur geknickt, sondern auch verdreht, was den Verschleiß reduziert. Die Herstellung solcher Faltenbälge ist jedoch aufwändig.

Es ist Aufgabe der Erfindung, Faltebälge ohne die vorgenannten Nachteile bereitzustellen, und insbesondere Faltenbälge bereitzustellen, die eine hohe Verschleißfestigkeit bei einem geringen Herstellungsaufwand aufweisen.

Die Aufgabe wird durch die Merkmale des Anspruchs 1 gelöst. Weiterbildungen der Erfindung sind Gegenstand der abhängigen Ansprüche.

Durch eine Ausbildung des Faltenbalgs mit einem ersten Balgschenkel und einem zweiten Balgschenkel so, dass sie einen Winkel einschließen, der ungleich 90° ist, ergibt sich auch bei einem Gewebe mit einem im gestreckten Zustand des Faltenbalgs ersten Faden in einer Längsrichtung des Faltenbalgs und mit einem zweiten Faden senkrecht zu der Längsrichtung, der Vorteil, dass der Lauf der Falte geändert wird und sich eine andere Belastung der Fäden ergibt, da der einzelne Faden des Faltenbalgs bei einem Auseinanderziehen und einem Zusammendrücken des Faltenbalgs nicht mehr nur geknickt wird, sondern die notwendige Verformung aus einer Kombination von Verdreh- und Knickbewegung erreicht wird, wodurch der Verschleiß des Faltenbalgs minimiert wird.

Die Erfindung wird mit Hilfe eines nachfolgenden Ausführungsbeispiels anhand der beigefügten Zeichnungen erläutert.

Insbesondere zeigen:
- Fig. 1a: eine Ansicht eines Faltenbalgs gemäß dem Stand der Technik aus einer seitlichen Richtung im rechten Winkel zu einer Längsrichtung des Faltenbalgs in einem annähernd gestreckten Zustand;
- Fig. 1b: eine Ansicht aus der seitlichen Richtung des Faltenbalgs von Fig. 1a in einem teilweise zusammengedrückten Zustand;
- Fig. 1c: eine vergrößerte Ansicht eines Fadenverlaufs eines Gewebes des Faltenbalgs von Fig. 1a;
- Fig. 2a: eine Ansicht in einer Längsrichtung des Faltenbalgs von Fig. 1 in einem teilweise zusammengedrückten Zustand, der etwa dem Zustand von Fig. 1b entspricht;
- Fig. 2b: eine Ansicht in der Längsrichtung des Faltenbalgs von Fig. 1 in einem vollständig zusammengedrückten Zustand;
- Fig. 3a: eine Ansicht eines erfindungsgemäßen Faltenbalgs aus einer seitlichen Richtung im rechten Winkel zu einer Längsrichtung des Faltenbalgs in einem annähernd gestreckten Zustand;
- Fig. 3b: eine Ansicht aus der seitlichen Richtung des Faltenbalgs von Fig. 3a in einem teilweise zusammengedrückten Zustand;
- Fig. 3c: eine vergrößerte Ansicht des Fadenverlaufs des Gewebes des Faltenbalgs von Fig. 3a.
- Fig. 4a: eine Ansicht in einer Längsrichtung des Faltenbalgs von Fig. 3a in einem teilweise zusammengedrückten Zustand, der etwa dem Zustand von Fig. 3b entspricht;
- Fig. 4b: eine Ansicht in der Längsrichtung des Faltenbalgs von Fig. 3a in einem vollständig zusammengedrückten Zustand;

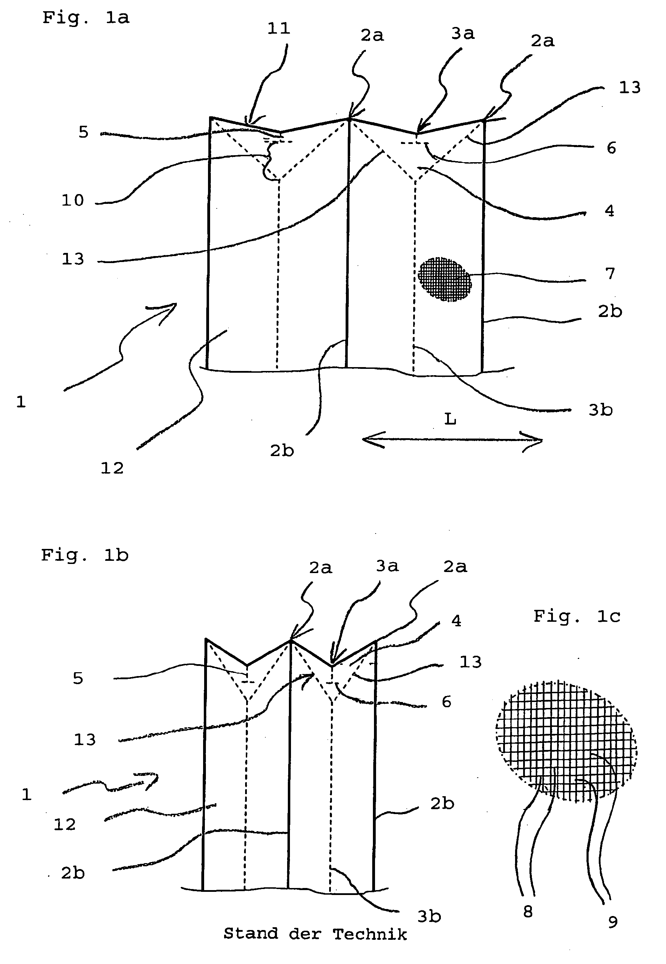

In Fig. 1 ist exemplarisch ein oberer Bereich von zwei Falten eines Faltenbalgs 1 für eine Bearbeitungsmaschine gemäß einem Stand der Technik gezeigt, der eine bestimmungsgemäße Form mit bestimmungsgemäßen Abmessungen aufweist. Die beiden Falten sind identisch und die Bezugszeichen sind jeweils nur auf das Merkmal von einer der Falten gerichtet. Der untere Bereich des Faltenbalgs 1 ist hier weggelassen.

Der Faltenbalg 1 weist einen ersten Balgschenkel 11 auf, der in Fig. 1 oben angeordnet ist. Der erste Balgschenkel 11 weist zwei erste Außenfalten 2a und eine mittig zu den ersten Außenfalten 2a liegende Innenfalte 3a auf. Die Außenfalten 2a setzen sich in einem zweiten Balgschenkel 12, der in Fig. 1 bezüglich einer Längsrichtung L seitlich dargestellt ist, als zwei zweite Außenfalten 2b fort. In dem zweiten Balgschenkel 12 ist bezüglich der zwei Außenfalten 2b eine Innenfalte 3b mittig angeordnet, die sich jedoch nicht bis zu der Innenfalte 3a des ersten Balgschenkels 11 erstreckt.

Zwischen der Innenfalte 3b und der Innenfalte 3a ist in dem zweiten Balgschenkel 12 ein sogenannter Zwickel 4 vorgesehen. Der Zwickel 4 wird von zwei Zwickelfalten 13 begrenzt, die sich ausgehend vom Ende der Innenfalte 3b jeweils zu Verbindungspunkten der Außenfalten 2a und 2b erstrecken und somit wird eine dreieckige Form des Zwickels 4 gebildet.

Der Faltenbalg 1 besteht aus einem Gewebe 7, das, wie in Fig. 1c gezeigt, aus ersten Fäden 8 und zweiten Fäden 9 besteht. Das Gewebe 7 wird durch einen Webvorgang hergestellt und so verarbeitet, dass die ersten Fäden 8 dem Kettfaden entsprechen und die zweiten Fäden 9 dem Schussfaden entsprechen. Die ersten Fäden 8 sind in dieser Ausführungsform in der Längsrichtung L angeordnet und die zweiten Fäden 9 im rechten Winkel zur Längsrichtung L. Die Anordnung der ersten Fäden 8 und der zweiten Fäden 9 kann alternativ auch vertauscht sein.

Durch die Gestaltung einer Abdeckung als der Faltenbalg 1, ist zwar die Länge des Faltenbalgs veränderlich, die Länge des Gewebes 7 bleibt jedoch unverändert.

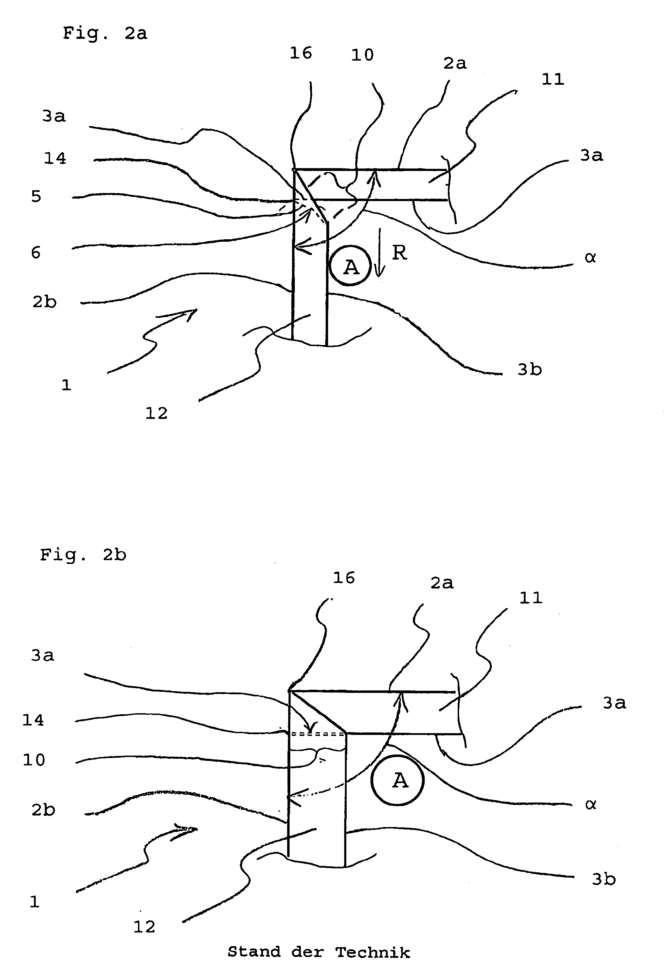

Wie aus den Figuren 2a und 2b zu ersehen ist, schließen der erste Balgschenkel 11 und der zweite Balgschenkel 12 einen Winkel α ein, der in dem gezeigten Stand der Technik 90° beträgt. Durch den ersten Balgschenkel 11 und den zweiten Balgschenkel 12 wird gemeinsam mit Bauteilen der Bearbeitungsmaschine, die hier nicht gezeigt sind, ein Schutzbereich A gebildet.

Im Betrieb, also bei einem Auseinanderziehen und Zusammendrücken des Faltenbalgs 1, führt der Faltenbalg folgende Verformungen aus.

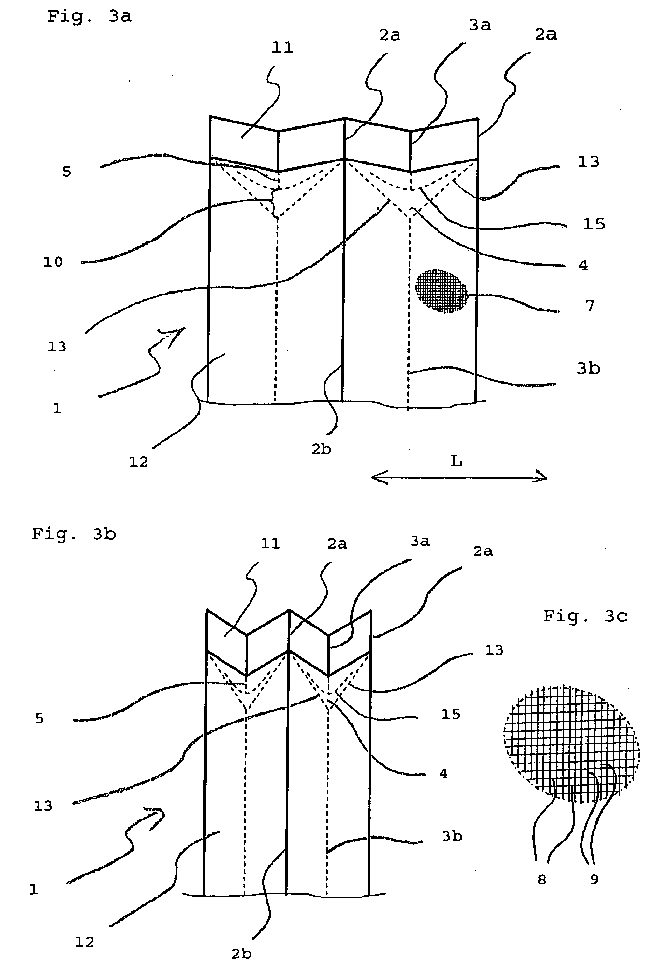

Es wird von einem gestreckten Zustand des Faltenbalgs 1, in dem also die Außenfalten 2a, 2b und die Innenfalten 3a, 3b sämtlicher Falten annähernd gestreckt sind, ausgegangen (siehe Fig. 1a und 3a).

Bei einem Zusammendrücken des Faltenbalgs 1 entsteht durch das Einknicken der Innenfalte 3a in einer Einknickrichtung R (siehe Fig. 2a), hier nach unten, unter anderem eine Schubspannung im Gewebe des Zwickels 4. Die Spannungen entstehen dadurch, dass die, in den Figuren von oben gesehen, rechteckigen Flächen des ersten Balgschenkels 11 zwischen der Innenfalte 3a und den Außenfalten 2a jeweils bestrebt sind, bedingt durch die Steifigkeit des Materials, ihre rechteckige Form beizubehalten. Somit ist der in den Fig. 2a und 2b gezeigte Endpunkt 14 der Innenfalte 3a beim Einknicken der Innenfalte 3a bestrebt, hier die gleiche horizontale Position beizubehalten während sich die Innenfalte 3a, wie in den Figuren 1a und 1b gezeigt, nach unten bewegt. Der Zwickel 4 versucht jedoch auch, bedingt durch die Steifigkeit seines Materials, seine dreieckige Form beizubehalten und nicht seine obere, in dem gestreckten Zustand des Faltenbalgs 1 gerade Kante einknicken zu lassen. Dadurch entsteht ausgehend von dem Endpunkt 14 der Innenfalte 3a, der sich nach unten bewegt während Endpunkte 16 der Außenfalten 2a sowohl die in den Figuren 2a und 2b gezeigten horizontalen als auch vertikalen Position beibehalten, unter anderem eine Schubspannung im Zwickel 4.

Bedingt durch ein Nach-Innen-Kippen des Zwickels 4 an seinem unteren Ende durch ein Einknicken der Innenfalte 3b und bedingt durch die Spannungen verformt sich der Zwickel so, dass eine Knickfalte 5, an der der Zwickel nach außen geknickt wird, entsteht. Am unteren Ende der Knickfalte 5 entsteht bedingt durch die senkrechte Krafteinleitung in den Zwickel 4, durch die die Spannungen entstehen, und bedingt durch die Struktur des Gewebes 7 eine waagrechte Falte 6.

Wie bei einem Vergleich von Fig. 1a und Fig. 1b zu sehen ist, bewegt sich die waagrechte Falte 6 bei einem Zusammendrücken des Faltenbalgs 1 und bei einem Einknicken der Innenfalten 3a und 3b innerhalb des Zwickels 4 in einem Walkbereich 10 nach unten. Dabei werden die zweiten Fäden 9 in der horizontalen Falte 6, also jeweils zwischen zwei der ersten Fäden 8 in einem Bereich der Knickfalte 5 abgeknickt. Die Knickbewegung in Verbindung mit der Walkbewegung führt zu einer Dauerschädigung des zweiten Fadens 9, so dass er nach kurzer Zeit bricht und der Faltenbalg 1 beschädigt wird, was die Standzeit verkürzt.

Die Beschreibung des Stands der Technik und der erfindungsgemäßen Ausführungsform in Bezug auf die Ortsangaben, z.B. oben, unten, horizontal, ist hier auf die Darstellung des Faltenbalgs 1 in den Figuren bezogen. Bei einer bestimmungsgemäßen alternativen Anordnung des Faltenbalgs 1 können diese Ortsangaben abweichen und beziehen sich dann relativ auf die tatsächlichen Verhältnisse ausgehend von dem relativ oberen ersten Balgschenkel 11 und dem relativ seitlichen zweiten Balgschenkel 12, die in der erfindungsgemäßen Ausführungsform einen erfindungsgemäßen Winkel α einschließen.

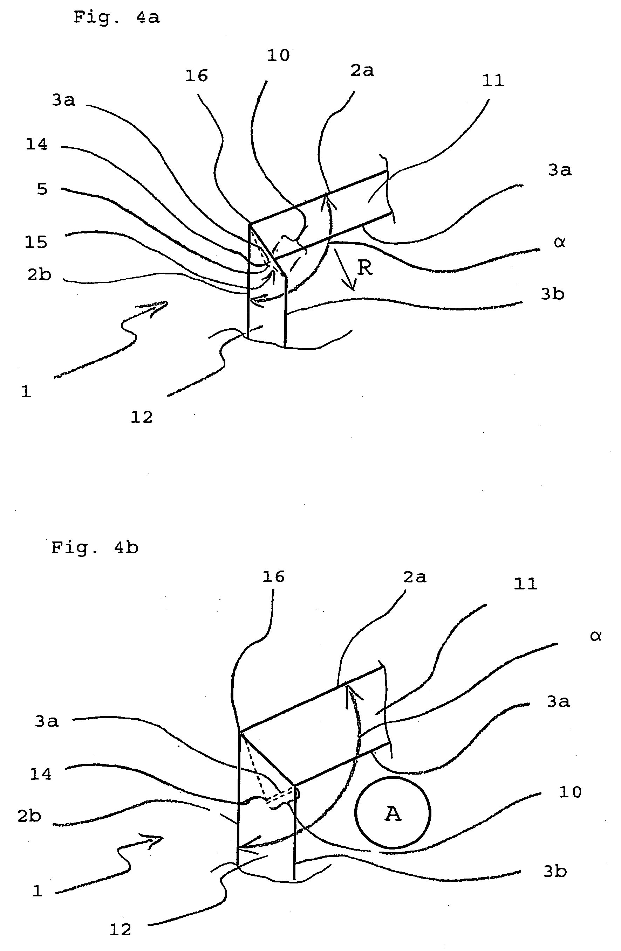

In den Figuren 3a, 3b, 3c und 4a, 4b wird die erfindungsgemäße Ausführungsform des Faltenbalgs 1 gezeigt. Identische Merkmale mit der Ausführungsform gemäß dem Stand der Technik sind mit gleichen Bezugszeichen versehen und werden nicht erneut beschrieben.

Der Unterschied zwischen dem unter Bezugnahme auf die Figuren 1a, 1b und 2a, 2b beschriebenen Stand der Technik und dem in den Figuren 3a, 3b und 4a, 4b gezeigten erfindungsgemäßen Faltenbalg 1 liegt darin, dass bei einer beibehaltenen Ausrichtung der Fäden 8 bzw. 9 in Längsrichtung L bzw. senkrecht zur Längsrichtung L (siehe Fig. 3c) der Winkel α dahingehend geändert ist, dass er im Gegensatz zu dem gezeigten Stand der Technik kein rechter Winkel ist. Der Winkel α kann erfindungsgemäß einen Winkel einnehmen, der größer als 0° und kleiner als 90° oder größer als 90° und kleiner als 180° ist.

Bei einem Zusammendrücken des Faltenbalgs 1 entsteht hier durch das Einknicken der Innenfalte 3a in der Einknickrichtung R, die hier nicht nach unten, sondern in einer Richtung, die senkrecht zu den Außenfalten 2a und zu den Innenfalten 3a verläuft, unter anderem sowohl eine Schubspannung als auch eine Biegespannung im Gewebe des Zwickels 4. Die Spannungen entstehen auch hier dadurch, dass die rechteckigen Flächen des ersten Balgschenkels 11 zwischen der Innenfalte 3a und den Außenfalten 2a jeweils bestrebt sind, bedingt durch die Steifigkeit des Materials, ihre rechteckige Form beizubehalten, und somit den in den Fig. 4a und 4b gezeigten Endpunkt 14 der Innenfalte 3a beim Einknicken der Innenfalte 3a hier in der Einknickrichtung R beizubehalten, während sich die Innenfalte 3a, wie in den Figuren 1a und 1b gezeigt, in der Einknickrichtung R bewegt. Da jedoch der Zwickel 4, bedingt durch die Steifigkeit seines Materials, auch versucht, seine dreieckige Form beizubehalten und seine obere, in dem gestreckten Zustand des Faltenbalgs 1 gerade Kante nicht einknicken zu lassen, entsteht ausgehend von dem Endpunkt 14 der Innenfalte 3a, der sich in der Einknickrichtung R bewegt, während die Endpunkte 16 der Außenfalten 2a sowohl die in den Figuren 4a und 4b gezeigten horizontalen als auch vertikalen Positionen beibehalten, unter anderem sowohl eine Schubspannung als auch eine Biegespannung.

Bedingt durch ein Nach-Innen-Kippen des Zwickels 4 durch das Einknicken der Innenfalte 3b, und bedingt durch die Spannungen verformt sich der Zwickel 4 so, dass die Knickfalte 5, an der der Zwickel nach außen geknickt wird, entsteht. Am unteren Ende der Knickfalte 5 entsteht bedingt durch eine Krafteinleitung an der Oberkante des Zwickels 4 durch das Einknicken der Innenfalte 3a in der Einknickrichtung R, die nicht in der Richtung des Zwickels 4 liegt sondern einen Winkel zu dem Zwickel 4 einschließt, der größer als 0° ist, unter anderem durch die Schubspannung und die Biegespannung eine gekrümmte, annähernd V-förmige, Falte 15. Wie im Vergleich von Fig. 3a und Fig. 3b zu sehen ist, bewegt sich die gekrümmte Falte 15 bei einem Einknicken der Innenfalten 3a und 3b innerhalb des Zwickels 4 in einem Walkbereich 10 nach unten. Dabei werden die zweiten Fäden 9 in der gekrümmten Falte 15 jedoch nicht jeweils zwischen zwei ersten Fäden 8 im Bereich der Knickfalte 5 abgeknickt, sondern die gekrümmte Falte 15 verläuft, bedingt durch die Biegespannung, gekrümmt in einem Bereich zwischen mehreren der ersten Fäden 8. Dadurch werden die Fäden 8, 9 zusätzlich verdreht und weisen keine zweidimensionale Knickung auf, sondern eine dreidimensionale Kombination einer Verdreh- und einer Knickbewegung. Somit wird es den Fäden 8, 9 ermöglich, sich der Bewegung geeignet anzupassen. Dadurch wird eine Dauerschädigung der Fäden 8, 9 vermieden, so dass der Faltenbalg 1 eine größere Standzeit aufweist.

Bei dem erfindungsgemäßen Faltenbalg 1 mit einem Winkel α von größer als 90° ist, wie im Vergleich der Figuren 2a, 2b mit den Figuren 4a, 4b zu erkennen ist, der Walkbereich 10 geringer und daher wird bei dem erfindungsgemäßen Faltenbalg 1 ein geringerer Bereich des Zwickels einer höheren Belastung ausgesetzt, so dass auch dadurch eine Standzeit verlängert wird.

Durch die Gestaltung des Faltenbalgs 1 in der Weise, dass der Winkel α ungleich 90° ist, wird also die punktuelle Belastung auf das Gewebe 7 des Faltenbalgs 1 im Bereich des Zwickels 4 reduziert, was die Standzeit erhöht. Bei einer Wahl des Winkels α größer als 90° und kleiner als 180° ergibt sich zusätzlich der Vorteil, dass der Walkbereich 10 kleiner als in dem Winkelbereich von 0° bis kleiner 90° ist, so dass der Verschleiß zusätzlich reduziert werden kann.

Bei der Konstruktion von Faltenbälgen sind somit bevorzugt Winkel α größer als 90° und kleiner als 180, insbesondere in stark strapazierten Bereichen, vorzusehen. Aus diesem Konstruktionsprinzip resultierende Winkel kleiner als 90° können durch die Aufnahme eines zusätzlichen Winkels vermieden werden (Spitzdach gegenüber Pultdach). Ist dies bauraumbedingt nicht realisierbar oder aus anderen Gründen nicht gewünscht, so sind Winkel kleiner als 90°-Winkel gegenüber Winkeln von 90° hinsichtlich der Verschleißanfälligkeit immer noch zu bevorzugen. Die Einstellung verschiedener Winkel am Faltenbalg, kann zudem dazu genutzt werden, vagabundierende Laserstrahlung gezielt abzulenken, um Strahlungsgefährdungen zu minimieren.

Weitere alternative oder optionale Maßnahmen für eine Reduzierung des Verschleißes sind ein Anordnen des nach oben gerichteten Balgschenkels des Faltenbalgs 1 in einer in Richtung der Falte nicht horizontalen Anordnung bzw. ein Vorsehen einer zusätzlichen Materiallage auf dem nach oben gerichteten Balgschenkel. Dadurch wird ermöglicht, dass Verschmutzungen abrutschen können bzw. verhindert, dass sich Verschmutzungen in den nach oben gerichteten Balgschenkel des Faltenbalgs 1 eindrücken können.

## Patentansprüche

1. Faltenbalg (1) für eine Bearbeitungsmaschine zum Schutz gegen Verschmutzung, wobei
der Faltenbalg (1) eine Längsrichtung (L) aufweist, und der Faltenbalg (1) in der Längsrichtung (L) längenveränderlich ist,
der Faltenbalg (1) mindestens einen ersten Balgschenkel (11) mit ersten Außenfalten (2a) und einer mittig zu den ersten Außenfalten (2a) liegenden Innenfalte (3a) und einen zweiten Balgschenkel (12) mit zweiten Außenfalten (2b), in die sich die ersten Außenfalten (2a) fortsetzen, und einer mittig zu den zweiten Außenfalten (2b) liegenden Innenfalte (3b) aufweist,
wobei die erste Außenfalte (2a) und die zweite Außenfalte (2b) in der Längsrichtung (L) gesehen einen Winkel (α) einschließen, der ungleich 90° ist,
**dadurch gekennzeichnet, dass**
der Faltenbalg (1) aus einem Gewebe (7) besteht, das in einem gestreckten Zustand des Faltenbalgs (1) einen ersten Faden (8) in der Längsrichtung (L) aufweist und einen zweiten Faden (9) in einem rechten Winkel zur Längsrichtung (L) aufweist, und dass
im zweiten Balgschenkel (12) anschließend an den ersten Balgschenkel (11) ein Zwickel (4), der von zwei Zwickelfalten (13) begrenzt ist, die sich ausgehend von einem Ende der Innenfalte (3b) jeweils zu Verbindungspunkten der ersten Außenfalten (2a) und zweiten Außenfalten (2b) erstrecken, wodurch eine dreieckige Form gebildet wird, vorgesehen ist, so dass bei einem Auseinanderziehen und Zusammendrücken des Faltenbalgs (1) in der Längsrichtung (L) der einzelne Faden (8, 9) im Bereich des Zwickels (4) eine Verformung insbesondere aus einer Kombination von Verdreh- und Knickbewegung aufweist.

2. Faltenbalg (1) gemäß Anspruch 1, **dadurch gekennzeichnet, dass** der Winkel (α) größer als 90° und kleiner als 180° ist.

3. Faltenbalg (1) gemäß Anspruch 1 oder 2, **dadurch gekennzeichnet, dass** der Faltenbalg (1) so in einer bestimmungsgemäßen Lage in der Bearbeitungsmaschine eingebaut werden kann, dass zumindest einer der Balgschenkel (11, 12) nach oben weist, und der zumindest eine nach oben gerichtete Balgschenkel (11, 12) nicht horizontal ist.

4. Faltenbalg (1) gemäß Anspruch 3, **dadurch gekennzeichnet, dass** der zumindest eine Balgschenkel (11, 12), der nach oben gerichtet ist, mit einer zusätzlichen Materiallage versehen ist.

## Claims

1. Bellows (1) for a processing machine for protection against soiling, wherein
the bellows (1) has a longitudinal direction (L), and the bellows (1) is variable in length in the longitudinal direction,
the bellows (1) comprises at least one first bellows shank (11) with first outer folds (2a) and an inner fold (3a) being arranged in a centered manner with respect to the first outer folds (2a), and one second bellows shank (12) with second outer folds (2b) into which the first outer folds (2a) continue and an inner fold (3b) arranged in a centered manner with respect to the second outer folds (2b),
wherein the first outer fold (2a) and the second outer fold (2b), as seen in the longitudinal direction (L), form an angle (α) which is not equal to 90 degrees,
**characterized in that**
the bellows (1) consists of a fabric (7) which, in a stretched state of the bellows (1), comprises a first thread (8) in the longitudinal direction (L) and a second thread (9) perpendicular with respect to the longitudinal direction (L), and that
in the second bellows shank (12) adjoining to the first bellows shank (11), a gusset (4) limited by two gusset folds (13) respectively extending, starting from an end of the inner fold (3b), to junctions of the first outer folds (2a) and second outer folds (2b), whereby a triangular shape is formed, is provided such that, when pulling and pressing together the bellows (1) in the longitudinal direction (L), the individual thread (8 ,9) comprises a deformation, in particular of a combination of a twist and fold motion, in the area of the gusset (4).

2. Bellows (1) according to claim 1, **characterized in that** the angle (α) is wider than 90 degrees and narrower than 180 degrees.

3. Bellows (1) according to claim 1 or 2, **characterized in that** the bellows (1) can be mounted in an intended position in the processing machine such that at least one of the bellows shanks (11, 12) is upwardly directed and the at least one bellows shank (11, 12) being upwardly directed is not horizontal.

4. Bellows (1) according to claim 3, **characterized in that** the at least one bellows shank (11, 12) being upwardly directed is provided with an additional layer of material.

## Revendications

1. Soufflet (1) pour une machine de traitement destinée à la protection contre l'encrassage, dans lequel :
- le soufflet (1) comprend une direction longitudinale (L) et la longueur du soufflet (1) peut varier dans la direction longitudinale (L),
- le soufflet (1) comprend, au moins, une première branche de soufflet (11) ayant des premiers plis externes (2a) et un pli interne (3a) situé au milieu des premiers plis externes (2a), et une seconde branche de soufflet (12) ayant des seconds plis externes (2b) dans lesquels se prolongent les premiers plis externes (2a) et un pli interne (3b) situé au milieu des seconds plis externes (2b),
- le premier pli externe (2a) et le second pli externe (2b) définissent, dans la direction longitudinale (L), un angle (α) qui est différent de 90°,
**caractérisé en ce que**
le soufflet (1) est réalisé en un tissu (7) qui, à l'état étiré du soufflet (1), comprend une première fibre (8) située dans la direction longitudinale (L) et une seconde fibre (9) faisant un angle droit par rapport à la direction longitudinale (L), et
dans la seconde branche de soufflet (12) à la suite de la première branche de soufflet (11), il est prévu un gousset (4) qui est limité par deux plis de gousset (13) qui s'étendent respectivement à partir d'une extrémité du pli interne (3b) vers les points de liaison du premier pli externe (2a) et du second pli externe (2b), de façon à former une forme triangulaire de sorte que, lors d'une extension et d'une rétraction du soufflet dans la direction longitudinale (L), les fibres (8, 9) présentent, dans la zone du gousset (4), une déformation en particulier constituée par une combinaison d'un mouvement de torsion et d'un mouvement de flexion.

2. Soufflet (1) conforme à la revendication 1,
**caractérisé en ce que**
l'angle (α) est supérieur à 90° et inférieur à 180°.

3. Soufflet (1) conforme à la revendication 1 ou 2,
**caractérisé en ce que**
le soufflet (1) peut être monté dans une position conforme à sa destination dans la machine de traitement de sorte qu'au moins l'une des branches des soufflets (11, 12) soit tournée vers le haut et que la branche de soufflet tournée vers le haut (11, 12) ne soit pas horizontale.

4. Soufflet (1) conforme à la revendication 3,
**caractérisé en ce que**
la branche de soufflet (11, 12), tournée vers le haut, est équipée d'une couche de matériau supplémentaire.
